# EUROPÄISCHE PATENTSCHRIFT

(11) **EP 4 134 254 B1**
(45) Veröffentlichungstag und Bekanntmachung des Hinweises auf die Patenterteilung: **01.04.2026**
(21) Anmeldenummer: 21190968.4
(22) Anmeldetag: 12.08.2021
(51) Int. Cl.: B60D 5/00, B61D 17/22, B64F 1/305

(54) **BALG FÜR EINEN ÜBERGANG ZWISCHEN ZWEI BEWEGLICH MITEINANDER VERBUNDENEN FAHRZEUGEN ODER FÜR EINE FLUGGASTBRÜCKE**
BELLOWS FOR A TRANSITION BETWEEN TWO MOVABLY INTERCONNECTED VEHICLES OR FOR AN AIRCRAFT PASSENGER BRIDGE
SOUFFLET POUR UNE TRANSITION ENTRE DEUX VÉHICULES MOBILES RELIÉS L'UN À L'AUTRE OU POUR UNE PASSERELLE D'EMBARQUEMENT

(43) Veröffentlichungstag der Anmeldung: 15.02.2023
(73) Patentinhaber: Hübner GmbH & Co. KG, 34123 Kassel (DE)
(72) Erfinder: Kunze, Andreas, 34212 Melsungen (DE)

(56) Entgegenhaltungen:
- EP-A1- 1 103 392
- EP-A2- 2 353 894
- CN-A- 105 599 553
- DE-A1- 1 400 854
- DE-C1- 10 044 303
- GB-A- 2 337 239
- GB-A- 2 350 091

## Beschreibung

Die vorliegende Erfindung betrifft einen Balg als Übergangsschutz für einen Übergang zwischen zwei beweglich miteinander verbundenen Wagenkästen eines mehrteiligen Fahrzeugs oder zwischen einer Fluggastbrücke und einem Flugzeug, wobei der Balg ein Dach und zwei zueinander gegenüberliegend angeordnete Seitenteile aufweist, wobei zumindest die zwei Seitenteile jeweils eine Mehrzahl von Falten oder Wellen aus einem biegbaren Material aufweisen, wobei jede der Falten oder Wellen eine Schmalseite und eine Längsseite aufweist, wobei jeweils zwei aneinanderstoßende Falten oder Wellen entlang einer ihrer Längsseiten miteinander verbunden sind.

Eine Falte ist aus zwei miteinander verbundenen flexiblen Materialbahnen, welche die vorzugsweise im Wesentlichen geraden Flächenabschnitte bilden, hergestellt. Die beiden Materialbahnen sind im Scheitelpunkt der Falte miteinander verbunden. Eine Welle ist aus einer einstückigen im Wesentlichen rechteckigen flexiblen Materialbahn mit einer Längsseite und einer Schmalseite hergestellt. Als Material für die Falte oder Welle wird ein elastomerbeschichtetes Trägermaterial verwendet.

Bei öffentlichen Transportmitteln wie Bussen und Bahnen, aber auch bei Fluggastbrücken ist es üblich, den Übergang für die Passagiere zwischen zwei Wagenkästen oder einer Fluggastbrücke und einem Flugzeug vor Wetter, Zugluft und anderen Umgebungseinflüssen zu schützen. Die dafür erforderlichen Bälge umschließen den Übergang zumindest im Bereich des Dachs und der einander gegenüberliegenden Seitenteile.

Der einzelne Balg ist dabei typischerweise zumindest im Bereich der Seitenteile aus einer Mehrzahl von Falten oder Wellen aus einem biegbaren bahnförmigen Material aufgebaut, sodass der Balg Relativbewegungen zwischen den Wagenkästen oder der Fluggastbrücke und dem Flugzeug auszugleichen vermag.

Während es mit den herkömmlichen Bälgen gut gelingt, die Umgebungseinflüsse, wie z.B. Wetter, abzuschirmen, stellt ein effektiver Schallschutz im Bereich eines von dem Balg geschützten Übergangs nach wie vor eine Herausforderung dar.

DE10044303 C1 zeigt einen in Umfangsrichtung geschlossen Durchgangsbalg aus Seitenwänden, Dach und Boden, wobei der Boden in Umfangsrichtung des Durchgangsbalges verlaufende Stangen aufweist. Die Stangen sind korsettartig in den Boden eingearbeitet und nicht mit den Profilen der Seitenwände verbunden. Die Stangen sind in sie formschlüssig umgebende Einstecktaschen eingeschoben.

EP2353894 A2 beschreibt ein Wellenbalg eines Übergangs zwischen zwei gelenkig miteinander verbundenen Fahrzeugen mit mehreren im Querschnitt U-förmigen Wellen, wobei diese aus zwei Schenkeln sowie einem die Schenkel verbindenden Steg besteht, wobei die Materialstärke des Steges größer ist als die Materialstärke der Schenkel. Insgesamt sind für eine einzige Welle drei Materialbahnen, zwei Schenkel und ein Steg, aneinandergesetzt.

DE1400854 A1 offenbart einen Wellenbalg in Schienen- oder Straßenfahrzeugen, welcher am Scheitelpunkt einer jeden Welle eine Verdickung zur mechanischen Verstärkung aufweist.

CN105599553 A betrifft einen Balg im Übergang, wobei der Balg mehrere hintereinander angeordnete miteinander in Verbindung stehende Balgelemente aufweist, wobei zur Verbindung einzelner Balgelemente Balgrahmen vorgesehen sind.

EP1103392 A1 bezieht sich auf ein Verfahren zur Herstellung einer flexiblen Leitung, deren Abmessungen und Form je nach ihrer Verwendung angepasst werden können. Die Anmeldung zeigt eine Verlängerung der Elemente aus einem weichen elastischen Material, wobei jedes verlängerte Element mit mindestens einem verlängerten Halteelement aus steifem und faltbarem Material fest verbunden ist, so dass es seine Form nach dem Falten beibehält. Die flache Hülle wird verformt, um sie zu schließen und die gewünschte Form des Querschnitts der Leitung zu erhalten, wobei die Hülle durch die Verformung der verlängerten Halteelemente in Form gehalten wird.

GB2350091 A beschäftigt sich mit dem Balg eines Übergangs zwischen zwei gelenkig miteinander verbundenen Fahrzeugen, wobei der Balg aus einem metallischen Werkstoff ausgebildet ist.

Daher ist es gegenüber dem Stand der Technik eine Aufgabe der vorliegenden Erfindung, einen Balg der eingangs genannten Art bereitzustellen, welcher einen wirksamen und effektiven Schallschutz bereitstellt.

Zur Lösung dieser Aufgabe wird erfindungsgemäß ein Balg mit den Merkmalen des unabhängigen Anspruchs 1 der vorliegenden Anmeldung bereitgestellt. Dazu weist bei einem Balg der eingangs genannten Art zumindest eine Falte oder Welle mindestens zwei entlang der Schmalseite der Falte oder Welle voneinander beabstandete Verstärkungsabschnitte auf.

Es hat sich gezeigt, dass die Schalldämmungs- und/oder -dämpfungseigenschaft des Verstärkungsabschnittes nicht nur von seiner Flächenausdehnung relativ zur Ausdehnung der Falte oder der Welle sowie seiner Dicke abhängt, sondern auch von der Anordnung des Verstärkungsabschnitts entlang der Schmalseite der Falte oder Welle.

Zumindest eine der Falten oder Wellen weist zumindest einen Verstärkungsabschnitt und zumindest zwei Normalabschnitte auf, wobei der Verstärkungsabschnitt eine Dicke aufweist, die größer ist als eine Dicke der zwei Normalabschnitte, wobei der Verstärkungsabschnitt eine Schmalseite und eine Längsseite aufweist, wobei sich die Längsseite des Verstärkungsabschnitts im Wesentlichen in Richtung der Längsseite der Falte oder Welle erstreckt und wobei eine Ausdehnung der Schmalseite des Verstärkungsabschnitts höchstens 75 % einer Ausdehnung der Schmalseite der Falte oder Welle beträgt.

Der vorliegenden Erfindung gelingt es, einen effektiven, d. h. im Hinblick auf den erzielten Effekt und den damit verbundenen Material- und/oder Herstellungsaufwand optimierten Schallschutz, bereitzustellen. Dabei wird unter Schallschutz im Sinne der vorliegenden Anmeldung der Schutz des von dem Balg definierten Innenraums gegenüber Schall, der seine Quelle außerhalb des Balgs hat, verstanden. Überraschenderweise hat sich gezeigt, dass es für einen wirksamen Schallschutz nicht erforderlich ist, eine Falte oder Welle des Balgs vollständig aus einem dickeren Material herzustellen oder vollständig mit einem zweiten Material zu füttern, sodass eine insgesamt dickere Struktur entsteht. Erfindungsgemäß reicht es aus, die Falte oder die Welle in einer Richtung parallel zur Schmalseite der Falte oder Welle abschnittsweise zu verdicken.

Im Sinne der vorliegenden Anmeldung wird unter einer Innenseite die Seite des Seitenteils, des Dachs oder eines Bodens des Balgs verstanden, die im montierten Zustand des Balgs zu dem Übergang, d. h. zu dem von dem Balg definierten Innenraum, hin zeigt, während eine Außenseite die Umgebungsseite außerhalb des Balgs bezeichnet.

Im Sinne der vorliegenden Anmeldung wird unter einer Falte oder einer Welle ein Abschnitt oder Segment z. B. des jeweiligen Seitenteils des Balgs verstanden, welcher in einem Querschnitt parallel zur Schmalseite einen Weg von der Innenseite des Balgs in Richtung der Außenseite nach außen und wieder zurück oder umgekehrt beschreibt.

In einer Ausführungsform der Erfindung ist der Balg ein Faltenbalg, wobei die Falten in einer Querschnittsebene parallel zur Schmalseite zickzackförmig angeordnet sind. In einem solchen Faltenbalg hat jede Falte zwei, näherungsweise gerade verlaufende Flächenabschnitte. Die Falten eines Faltenbalges haben in einer Querschnittsansicht parallel zur Schmalseite der Falte einen in etwa V-förmigen Verlauf.

Eine Falte ist aus zwei miteinander verbundenen flexiblen Materialbahnen, welche die vorzugsweise im Wesentlichen geraden Flächenabschnitte bilden, hergestellt. Dabei sind in einer Ausführungsform der Erfindung die beiden Materialbahnen im Scheitelpunkt der Falte miteinander verbunden. Eine solche Verbindung wird in einer Ausführungsform der Erfindung durch eine Naht, eine Verklebung, eine Verschweißung und/oder ein Klemmprofil, beispielsweise aus Stahl oder aus Aluminium, gebildet. Jede Falte ist mit zumindest einer benachbarten Falte ebenfalls verbunden. Eine solche Verbindung ist in einer Ausführungsform durch eine Naht, eine Verklebung, eine Verschweißung und/oder ein Klemmprofil, beispielsweise aus Stahl oder Aluminium, gebildet.

In einer Ausführungsform der Erfindung ist der Balg ein Wellenbalg, wobei jede Welle in einer Querschnittsebene parallel zur Schmalseite bogenförmig verläuft. Die Wellen eines Wellenbalges haben in einer Querschnittsansicht parallel zur Schmalseite der Welle einen in etwa U-förmigen Verlauf.

Eine Welle im Sinne der vorliegenden Anmeldung wird gebildet von einem Materialabschnitt, der sich entweder von der Innenseite gekrümmt nach außen und dann wieder zur Innenseite erstreckt oder umgekehrt.

Eine Welle ist aus einer im Wesentlichen rechteckigen flexiblen Materialbahn mit einer Längsseite und einer Schmalseite hergestellt. Dabei kann die einzelne Welle einstückig oder mehrstückig, wobei mehrere bahnförmige, flexible Materialabschnitte beispielsweise durch Verschweißen, Verkleben oder Vernähen miteinander verbunden sind, hergestellt sein.

Jeweils zwei nebeneinander angeordnete Wellen sind an ihren Längsseiten miteinander verbunden. Eine solche Verbindung ist in einer Ausführungsform durch eine Naht, eine Verklebung, eine Verschweißung und/oder ein Klemmprofil, beispielsweise aus Stahl oder Aluminium, hergestellt. In einer Ausführungsform der Erfindung sind mehrere Wellen aus einer einzigen flexiblen Materialbahn hergestellt.

Die Schmalseite der Falte oder Welle erstreckt sich im eingebauten Zustand des Balgs im Wesentlichen parallel zu der Brücke zwischen den Wagenkästen oder den Brückenabschnitten. Im eingebauten Zustand des Balgs erstreckt sich die Schmalseite im Wesentlichen horizontal. Demgegenüber erstrecken sich im eingebauten Zustand des Balgs die Längsseite der Falte oder Welle sowie die Längsseite des Verstärkungsabschnitts im Wesentlichen vertikal und/oder senkrecht zu der Brücke.

Unter der Ausdehnung der Schmalseite der Falte oder Welle wird in dieser Anmeldung die geometrische Länge des gesamten genau eine Falte oder Welle bildenden Materials in einer Schnittansicht parallel zur Schmalseite verstanden.

Ein Verstärkungsabschnitt kann sich aus einem oder mehreren Einzelabschnitten in Richtung der Längs- oder Schmalseite zusammensetzen. Diese Abschnitte können dabei mit oder ohne Abstand zueinander angeordnet sein.

In einer Ausführungsform der Erfindung umfasst auch das Dach eine Mehrzahl von Falten oder Wellen aus einem biegbaren Material, so wie sie zuvor für die Seitenteile beschrieben wurden.

In einer Ausführungsform der Erfindung haben die Seitenteile zumindest abschnittsweise einen in der Längsrichtung geraden Verlauf. In einem Übergangsbereich zwischen dem Seitenteil und dem Dach weist das Material des Balgs des Seitenteils in einer Ausführungsform einen gekrümmten Verlauf auf.

Es versteht sich, dass in einer Ausführungsform der Erfindung auch zumindest eine der Falten oder Wellen des Dachs zumindest einen Verstärkungsabschnitt und zumindest zwei Normalabschnitte aufweist.

In einer Ausführungsform der Erfindung weist der Balg zusätzlich zu dem Dach und den zwei einander gegenüberliegend angeordneten Seitenteilen einen Boden auf. Dieser Boden erstreckt sich im eingebauten Zustand des Balgs unter dem Brückensystem für den Übergang zwischen den Wagenkästen oder den Brückenabschnitten hindurch.

In einer Ausführungsform der Erfindung weist auch der Boden eine Mehrzahl von Falten oder Wellen aus einem biegbaren Material auf. In einer Ausführungsform der Erfindung weist zumindest eine der Falten oder Wellen des Bodens zumindest einen Verstärkungsabschnitt und zumindest zwei Normalabschnitte auf.

In einer Ausführungsform der Erfindung ist der Verstärkungsabschnitt streifenförmig, wobei die Längsseite des streifenförmigen Verstärkungsabschnitts mindestens halb so lang ist, vorzugsweise gleich lang ist wie die Längsseite eines gerade verlaufenden Abschnitts der Falte oder Welle. Es hat sich herausgestellt, dass eine optimale Schallreduzierung zwar dann erzielt wird, wenn der Verstärkungsabschnitt in etwa gleich lang ist wie die Längsseite des gerade verlaufenden Abschnitts der Falte oder Welle. Allerdings lässt sich ein ähnlich guter Schalldämmungs- und/oder -dämfpungseffekt erzielen, wenn der Verstärkungsabschnitt kürzer ausgestaltet wird oder gar aus einer Mehrzahl von kürzeren in der Längsrichtung hintereinander angeordneten Streifen besteht.

In einer Ausführungsform der Erfindung ist die Dicke des Verstärkungsabschnitts mindestens 1,25-mal, vorzugsweise mindestens 1,5-mal und besonders bevorzugt mindestens doppelt so groß wie die Dicke des Normalabschnitts. Beispielsweise ist in einer Ausführungsform der Erfindung die Dicke des Materials der Falte oder der Welle im Normalabschnitt 4 mm, während die Gesamtmaterialdicke in dem Verstärkungsabschnitt 5,1 mm beträgt. Es hat sich herausgestellt, dass bereits mit einem vergleichsweise geringen Materialaufwand ein guter Schalldämmungs- und/oder -dämpfungseffekt erzielt werden kann.

In einer Ausführungsform der Erfindung ist die Dicke des Verstärkungsabschnitts höchstens viermal, vorzugsweise höchstens dreimal so groß wie die Dicke des Normalabschnitts.

In einer Ausführungsform der Erfindung beträgt die Ausdehnung der Schmalseite des Verstärkungsabschnitts höchstens 60 %, vorzugsweise höchstens 50 % und besonders bevorzugt höchstens 25 % der Ausdehnung der Schmalseite der Falte oder Welle.

Es hat sich gezeigt, dass sich auch mit einem Materialaufwand, der entlang der Schmalseite höchstens 60 %, vorzugsweise höchstens 50 % und besonders bevorzugt höchstens 25 % der Ausdehnung der Schmalseite der Falte oder Welle beträgt, eine beachtliche Schalldämmung und/oder -dämpfung erzielen lässt. Es versteht sich, dass je geringer die Ausdehnung der Schmalseite des Verstärkungsabschnitts bezogen auf die Ausdehnung der Schmalseite der Falte oder Welle ist, desto effizienter die Schalldämmung und/oder -dämpfung bezogen auf den Materialaufwand ist.

In einer Ausführungsform der Erfindung beträgt die Ausdehnung der Schmalseite des Verstärkungsabschnitts mindestens 5 %, vorzugsweise mindestens 10 % der Ausdehnung der Schmalseite der Falte oder Welle. Es hat sich gezeigt, dass eine Ausdehnung des Verstärkungsabschnitts unterhalb dieser angegebenen Werte die erzielte Schalldämmung und/oder -dämpfung den Materialaufwand nicht mehr rechtfertigt.

In einer Ausführungsform der Erfindung beträgt die Breite der Schmalseite des Verstärkungsabschnittes mindestens 10 mm, vorzugsweise mindestens 20 mm.

In einer Ausführungsform der Erfindung weist die mindestens eine Falte oder Welle genau zwei entlang der Schmalseite der Falte oder Welle voneinander beabstandete Verstärkungsabschnitte auf.

Ist der Balg ein Faltenbalg, so hat jede Falte zwei, näherungsweise gerade verlaufende Flächenabschnitte, welche von einer von außen einwirkenden Schallwelle angeregt werden können. Gerade in einer solchen Ausführungsform stellt die Anordnung von mindestens zwei, vorzugsweise aber genau zwei Verstärkungsabschnitten, wobei jeder der Verstärkungsabschnitte auf einem der Flächenabschnitte der Falte angeordnet ist, eine gute Schalldämmung und/oder -dämpfung bereit.

Die Anregung einer Welle eines Wellenbalgs bei Einwirkung einer Schallwelle erfolgt außerhalb des mechanisch sehr stabilen Scheitelpunktes, d. h. zwischen dem Scheitelpunkt und den entlang der Schmalseite liegenden Enden der Welle. Daher sind in einer Ausführungsform der Erfindung, bei welcher der Balg ein Wellenbalg ist, die mindestens zwei, vorzugsweise genau zwei Verstärkungsabschnitte entlang der gekrümmten Seitenflächen der Welle außerhalb ihres Scheitelpunktes angeordnet.

In einer Ausführungsform der Erfindung sind die zwei Verstärkungsabschnitte spiegelsymmetrisch zu einer durch den Scheitelpunkt der Falte oder Welle verlaufenden Symmetrieebene entlang der Schmalseite der Falte oder Welle verteilt.

In einer Ausführungsform der Erfindung ist der Balg ein Wellenbalg, wobei die zwei Verstärkungsabschnitte zwei, parallel zu den Längsseiten der Welle verlaufende Linien überdecken und wobei die Linien die Schmalseite der biegbaren Materialbahnen in drei Segmente mit in etwa gleicher Ausdehnung unterteilen. Eine solche Ausführungsform ist insbesondere bei Wellenbalgen vorteilhaft, deren einzelne Wellen eine vergleichsweise kurze Erstreckung aufweisen, sodass der Balg näherungsweise einen Halbkreis beschreibt.

In einer weiteren Ausführungsform ist der Balg ein Wellenbalg mit einer Mehrzahl von Wellen, wobei die zwei Verstärkungsabschnitte zwei gedachte, parallel zu den Längsseiten der Welle verlaufende Linien überdecken und wobei in einer Schnittebene parallel zu der Schmalseite der Welle eine erste der beiden Linien unter einem Winkel von + 45° bezogen auf eine Spiegelsymmetrieebene der Welle und eine zweite der beiden Linien unter einem Winkel von - 45° bezogen auf die Spiegelsymmetrieebene angeordnet sind, wobei der Scheitelpunkt der Winkel gegeben ist durch einen Schnittpunkt zwischen der Spiegelsymmetrieebene und einer zu der Spiegelsymmetrieebene senkrechten Geraden, so dass ein Umkreis um den Scheitelpunkt die Gerade und die Spiegelsymmetrieebene innerhalb des biegbaren bahnförmigen Materials der Welle schneidet, und wobei der Umkreis in einem nicht-gestreckten und einem nicht-komprimierten Zustand der Welle bestimmt ist.

Wie oben ausgeführt erfolgt die Anregung einer Welle des Wellenbalgs bei Einwirkung einer Schallwelle insbesondere außerhalb des mechanisch sehr stabilen Scheitelpunktes. Dabei hat sich gezeigt, dass die Bereiche maximaler Anregung bei einer solchen Welle in etwa unter 45° angeordnet sind, wenn man einen Abschnitt der Welle betrachtet, der einen Bogen von etwa 180° beschreibt.

Im Sinne der vorliegenden Anmeldung ist der nicht-gestreckte und nicht-komprimierte Zustand der Welle, der lastfreie Zustand im eingebauten und betriebsbereiten Zustand des Balgs.

In einer Ausführungsform der Erfindung ist der Verstärkungsabschnitt durch eine Verdickung des biegbaren Materials der Falte oder Welle gebildet. Mit anderen Worten ausgedrückt bildet in einer solchen Ausführungsform eine einzige Lage eines flexiblen bahnförmigen Materials den jeweiligen Verstärkungsabschnitt. Als Material für die Falte oder Welle kommt wie beschrieben ein elastomerbeschichtetes Trägermaterial zum Einsatz. Bei dem Trägermaterial kann es sich insbesondere um ein Textil handeln. Zur Ausbildung der Verdickung kann das Trägermaterial in dem Verstärkungsabschnitt eine größere Dicke aufweisen als in den Normalabschnitten und/oder es können mehrere Lagen des Trägermaterials vorgesehen sein, wodurch sich eine größere Dicke ergibt. Alternativ oder zusätzlich kann die Elastomerbeschichtung im Bereich der Verdickung dicker ausgebildet sein und/oder es kann eine zusätzliche Schicht vorgesehen sein, welche z. B. ebenfalls elastomerbasiert sein kann.

In einer alternativen Ausführungsform ist der Verstärkungsabschnitt mit einem auf das biegbare bahnförmige Material der Falte oder Welle aufgebrachten und mit diesem verbundenen Materialstreifen gebildet. Dabei ist die Verbindung zwischen dem biegbaren bahnförmigen Material der Falte oder Welle und dem Materialstreifen in einer Ausführungsform ausgewählt aus beispielsweise einem Aufkleben, einem Aufnähen und einem Aufschweißen oder einer Kombination davon.

Es versteht sich, dass in einer Ausführungsform der Erfindung der den Verstärkungsabschnitt definierende Materialstreifen ebenfalls ein biegbares bahnförmiges Material aufweist.

In einer Ausführungsform der Erfindung folgt der Materialstreifen, welcher den Verstärkungsabschnitt definiert, einer Krümmung des biegbaren bahnförmigen Materials der Falte oder Welle. Insbesondere kann der Materialstreifen, welcher den Verstärkungsabschnitt definiert, umlaufend der Welle oder Falte folgen, welche sowohl die geraden Abschnitten, wie die Seitenteile, das Dach und ggf. den Boden umfasst, als auch die Ecken umfasst.

In einer Ausführungsform der Erfindung ist der Materialstreifen mit zwei Nähten mit dem biegbaren bahnförmigen Material der Falte oder Welle vernäht, wobei die Nähte in einer Richtung parallel zu der Schmalseite des Materialstreifens vorzugsweise einen Abstand von mindestens 5 mm, vorzugsweise von mindestens 7 mm und besonders bevorzugt von mindestens 10 mm zueinander aufweisen. Die zwei Nähte erstrecken sich dabei in einer Ausführungsform im Wesentlichen in der Längsrichtung des Materialstreifens. In einer Ausführungsform der Erfindung ist der Materialstreifen mit genau zwei Nähten mit dem biegbaren bahnförmigen Material der Falte oder Welle vernäht.

Es hat sich gezeigt, dass zwei in Längsrichtung verlaufende Nähte mit dem erwähnten Mindestabstand einfach herzustellen sind und so eine effektive Schalldämmung und/oder -dämpfung bereitgestellt wird. Dies gilt selbst dann, wenn in einer Ausführungsform der Materialstreifen nicht zusätzlich flächig mit dem biegbaren bahnförmigen Material der Falte oder Welle, beispielsweise durch Kleben, verbunden ist.

Grundsätzlich kann der Verstärkungsabschnitt durch eine Verdickung der Materialstärke auf der Außenseite oder der Innenseite der Falte oder Welle erfolgen. Aufgrund der unterschiedlichen Möglichkeiten der Ausgestaltung einer Falte oder Welle kann dabei insbesondere bei der Welle entweder deren konkave oder deren konvexe Seite auf der Innenseite vorliegen. Bei einer bevorzugten Ausführungsform befindet sich der Verstärkungsabschnitt auf der konkaven Seite der Welle, insbesondere unabhängig davon, ob sich diese auf der Innen- oder Außenseite befindet. Durch diese Anordnung lässt sich eine besonders gute Schalldämmung und/oder -dämpfung erreichen. In einer weiteren Ausführungsform ist der Verstärkungsabschnitte auf einer Innenseite des Balgs angeordnet. Eine solche Ausführungsform reduziert eine Verschmutzung, Verwitterung und einen umweltbedingten Verschleiß des Verstärkungsabschnitts in einem Betrieb.

In einer Ausführungsform der Erfindung weist mindestens eine Hälfte der Mehrzahl von Falten oder Wellen zumindest einen Verstärkungsabschnitt auf. Die Anordnung von Verstärkungsabschnitten auf zumindest der Hälfte der Mehrzahl von Falten oder Wellen bewirkt bereits eine merkliche Schalldämmung und/oder -dämpfung. In einer Ausführungsform weist mindestens 75 % der Mehrzahl von Falten oder Wellen zumindest einen Verstärkungsabschnitt auf. In einer Ausführungsform weist jede der Falten oder Wellen zumindest einen Verstärkungsabschnitt auf.

In einer Ausführungsform der Erfindung weist der Balg an einer Stirnseite ein Verbindungselement zum Montieren des Balgs an einem Wagenkasten des mehrteiligen Fahrzeugs oder an eine Fluggastbrücke auf.

In einer weiteren Ausführungsform der Erfindung weist der Balg an einer Stirnseite, insbesondere an der der Stirnseite mit dem Flansch gegenüberliegenden Stirnseite, einen Kuppelrahmen zum Verbinden des Balgs mit einem zweiten, an einem anderen Wagenkasten oder an einem anderen Brückenabschnitt montierten Balg auf.

Die oben genannte Aufgabe wird zudem durch ein Übergangssystem mit einem Balg in einer Ausführungsform, so wie sie zuvor beschrieben wurden, und einer Brücke gelöst. Ein solches Übergangssystem wird an die Hersteller von Eisenbahnwaggons oder Omnibuswagen als Zulieferteil bzw. -system geliefert.

Die vorliegende Erfindung betrifft in einer Ausführungsform auch ein Fahrzeug, insbesondere einen Eisenbahnwaggon oder einen Omnibuswagen, mit einem Wagenkasten, an dessen Stirnseite ein Balg gemäß einer Ausführungsform, so wie sie zuvor beschrieben wurden, montiert ist.

Zudem umfasst eine Ausführungsform der vorliegenden Erfindung auch einen Brückenabschnitt einer Fluggastbrücke, an dessen Stirnseite ein Balg gemäß einer Ausführungsform, so wie sie zuvor beschrieben wurde, montiert ist.

In Bezug auf vorteilhafte Ausführungsformen des erfindungsgemäßen Übergangssystems, des erfindungsgemäßen Fahrzeugs und der erfindungsgemäßen Fluggastbrücke sowie deren Brückenabschnitt gelten die Ausführungen zu dem erfindungsgemäßen Balg entsprechend.

Weitere Vorteile, Merkmale und Anwendungsmöglichkeiten der vorliegenden Erfindung werden anhand der folgenden Beschreibung von Ausführungsformen davon und der dazugehörigen Figuren deutlich. In den Figuren sind gleiche Elemente mit gleichen Bezugszeichen bezeichnet.
- Figur 1: ist eine isometrische Darstellung eines Wellenbalgs.
- Figur 2: ist eine schematische Querschnittsansicht in einer Schnittebene parallel zur Schmalseite der Falten eines erfindungsgemäßen Wellenbalgs.
- Figur 3: ist eine schematische Querschnittsansicht in einer Schnittebene parallel zur Schmalseite der Wellen eines erfindungsgemäßen Wellenbalgs.
- Figur 4: ist eine schematische Querschnittsansicht in einer Schnittebene parallel zur Schmalseite der Wellen durch eine Welle eines Wellenbalgs gemäß einer zweiten Ausführungsform der Erfindung.
- Figur 5: ist eine schematische Querschnittsansicht in einer Schnittebene parallel zur Schmalseite der Wellen durch Welle eines Wellenbalgs gemäß einer weiteren Ausführungsform der Erfindung.

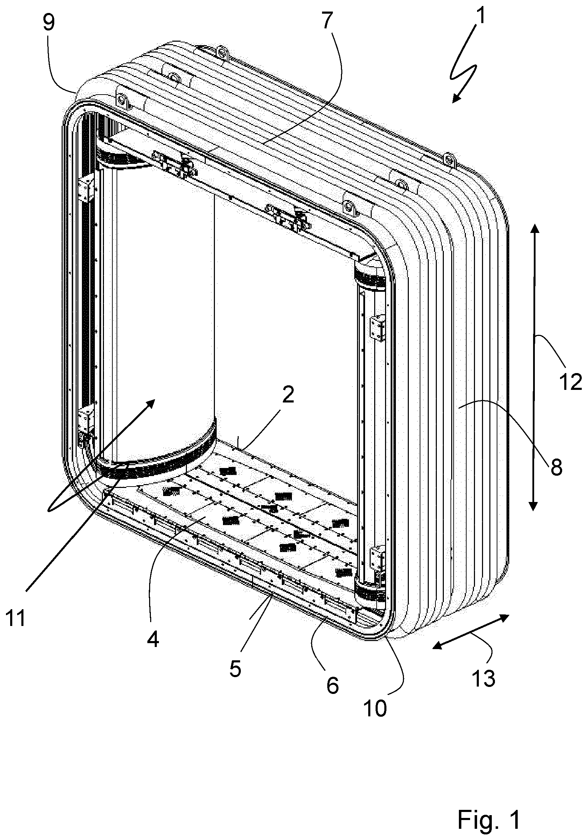

Figur 1 zeigt einen Balg 1, welcher als Wellenbalg ausgestaltet ist, so wie er für die Verbindung von zwei Schienenfahrzeugen zum Einsatz kommt. Die Darstellung der Figur 1 dient dazu, eine Anwendung der vorliegenden Erfindung verständlich zu beschreiben, wobei die Verstärkungsabschnitte 14 in Figur 1 nicht erkennbar sind.

Der Balg 1 wird an seiner in der Darstellung aus Figur 1 abgewandten Stirnseite 2 mit einem Wagenkasten 3 eines Eisenbahnwaggons verbunden. Der Balg 1 dient dazu, den Übergang zwischen den Wagenkästen 3 der beiden miteinander gekoppelten Eisenbahnwaggons vor Umgebungseinflüssen, insbesondere vor Fahrtwind und Wetter, zu schützen. Der Balg 1 bildet gemeinsam mit der Brücke 4, welche von dem Balg 1 umgeben ist, ein Übergangssystem. An der in Figur 1 vorderen Stirnseite 5 weist der Balg 1 einen Anschraubrahmen 6 zum Verbinden des Balges mit dem Wagenkasten 3 auf. Der Balg 1 umfasst ein Dach 7 und zwei einander gegenüberliegend angeordnete Seitenteile 8, 9. Zudem verfügt der gezeigte Balg 1 über einen Boden 10, der sich unter der Brücke 4 hindurch erstreckt. Auf diese Weise bildet der Balg 1 eine Art Rahmen um den Übergang zwischen zwei Wagenkästen 3 zweier gekuppelter Eisenbahnwaggons herum.

Die Schmalseite der einzelnen Falten oder Wellen der Seitenteile 8, 9 ist in Figur 1 mit dem Bezugszeichen 13 bezeichnet. Die Längsseite der Wellen oder Falten bezeichnet die in Figur 1 mit dem Bezugszeichen 12 bezeichnete Richtung.

Die einzelnen Wellen 18 des Balgs 1 bestehen aus einem biegbaren bahnförmigen Material, welches in der dargestellten Ausführungsform ein elastomerbeschichtetes Textil ist. Die Wellen 18 des Wellenbalgs aus Figur 1 haben in einer Ebene parallel zur Schmalseite 13 der einzelnen Wellen einen im Wesentlichen U-förmigen Verlauf. Ein grundsätzlich ähnlicher Aufbau eines Balgs 1 lässt sich auch als Faltenbalg 1 realisieren, wobei die einzelnen Falten 15 des Balgs dann in einer Ebene parallel zur Schmalseite 13 im Wesentlichen V-förmig ausgestaltet sind.

Neben dem Schutz vor Fahrtwind und Wetter dient der Balg 1 auch der Dämmung und/oder Dämpfung von Umgebungsgeräuschen, allgemeiner ausgedrückt dem Schallschutz.

Um diesen Schallschutz, welcher alleine durch die Trennung des von dem Balg 1 definierten Innenraums 11 durch den Balg 1 von der Umgebung bereitgestellt wird, zu verbessern, werden erfindungsgemäß Verstärkungsabschnitte 23 an den einzelnen Falten 15 oder Wellen 18 eines Balges 1, 1' ausgebildet. Diese Verstärkungsabschnitte 23 stützen die jeweilige Falte oder Welle in Bereichen mit geringerer mechanischer Stabilität. Die verbleibenden, dünneren Abschnitte einer jeden Falte 15 oder Welle 18 bilden im Sinne der vorliegenden Anmeldung die Normalabschnitte 24.

In allen gezeigten Ausführungsformen weist jede Falte 15 oder jede Welle 18 genau zwei Verstärkungsabschnitte 23 auf, so dass jede Falte oder Welle drei Normalabschnitte 24 hat. Jeder der Verstärkungsabschnitt 23 ist mit einem auf das biegbare bahnförmige Material 16 der Falte 15 oder Welle 18 aufgenähten Materialstreifen 14 gebildet. Die Materialstreifen 14, welche die Verstärkungsabschnitte 23 definieren, sind auf der Innenseite des jeweils Balgs 1, 1' angeordnet.

Die Materialstreifen 14 der Verstärkungsabschnitte 23 sind ebenfalls aus einem biegbaren Material hergestellt, so dass sie einer Krümmung des biegbaren bahnförmigen Materials 16 der Falte 15 oder Welle 18 folgen. Jeder der Materialstreifen 14 ist mit zwei Nähten mit dem biegbaren bahnförmigen Material 16 der Falte 15 oder Welle 18 vernäht, wobei die Nähte 17 in einer Richtung parallel zu der Schmalseite 13 des Materialstreifens 14 einen Abstand von 10 mm zueinander aufweisen.

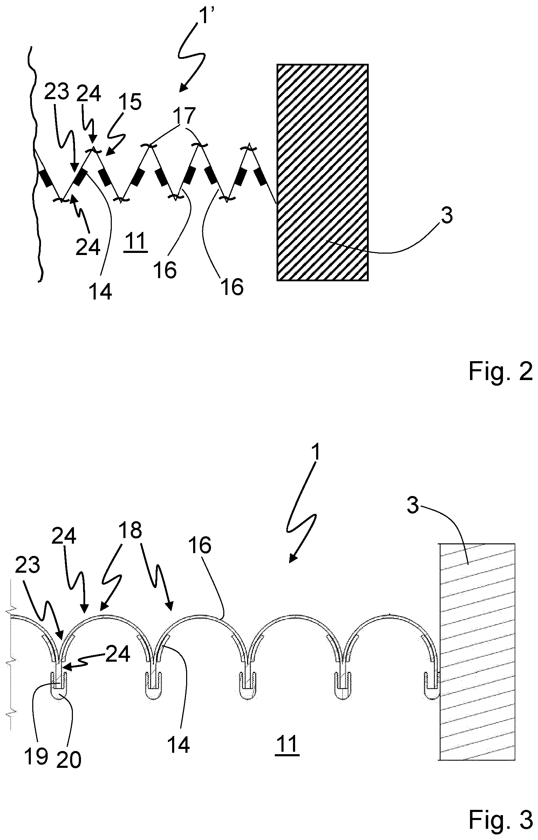

Im Folgenden werden daher die einzelnen Falten 15 oder Wellen 18 eines Balgs 1, 1' gemäß der vorliegenden Erfindung genauer betrachtet. Figur 2 veranschaulicht die erfindungsgemäße Ausbildung von Verstärkungsabschnitten 23 an einem Faltenbalg 1'. Demgegenüber zeigt Figur 3 die Ausbildung derartiger Verstärkungsabschnitte 23 an einem Wellenbalg 1.

Der Faltenbalg 1' aus Figur 2 weist eine Mehrzahl von Falten 15 auf, wobei die Falten 15 aus jeweils zwei flexiblen Materialbahnen 16 aufgebaut sind, die einen V-förmigen Verlauf in einer Querschnittsebene parallel zur Schmalseite 13 der Falten 15 haben. Die einzelnen Materialbahnen sind an ihren Enden jeweils miteinander vernäht. Die entsprechenden Nähte sind in Figur 2 schematisch angedeutet und mit dem Bezugszeichen 17 bezeichnet. Die Ausdehnung einer Falte 15 in einer Richtung parallel zur Schmalseite bezeichnet die Länge der miteinander verbundenen Materialbahnen 16 einer einzigen Falte 15. Die Verstärkungsabschnitte 14 sind so aufgebracht, dass sie jeden Schenkel der jeweiligen Falte 15 im Bereich seiner Mitte verstärken. In diesem Bereich hat die jeweilige Falte 15 die geringste mechanische Stabilität und damit die höchste Wahrscheinlichkeit für eine akustische Anregung. Dabei weist jede Falte 15 genau zwei Verstärkungsabschnitte 14 auf.

Die einzelnen Wellen 18 des Wellenbalgs 1 aus Figur 3 sind ebenfalls jeweils mit genau zwei Verstärkungsabschnitten 14 versehen. Dabei ist der Verlauf der Wellen 18 im Querschnittsprofil deutlich als U-förmig zu erkennen. Jede der Wellen 18 ist von einer biegbaren Materialbahn gebildet und erstreckt sich von dem Innenraum 11 aus gekrümmt nach außen und dann wieder nach innen. Zwei benachbarte Wellen 18 bzw. deren Materialbahnen 16 sind an ihren Enden 19 miteinander verbunden. Bei dieser Verbindung sorgt jeweils ein Klemmprofil 20 aus Aluminium für die erforderliche Stabilität. Die Ausdehnung der Schmalseite 13 jeder Welle 18 ist die Länge der Materialbahn 16 in der gezeigten Querschnittsansicht, welche genau eine Welle 18 bildet.

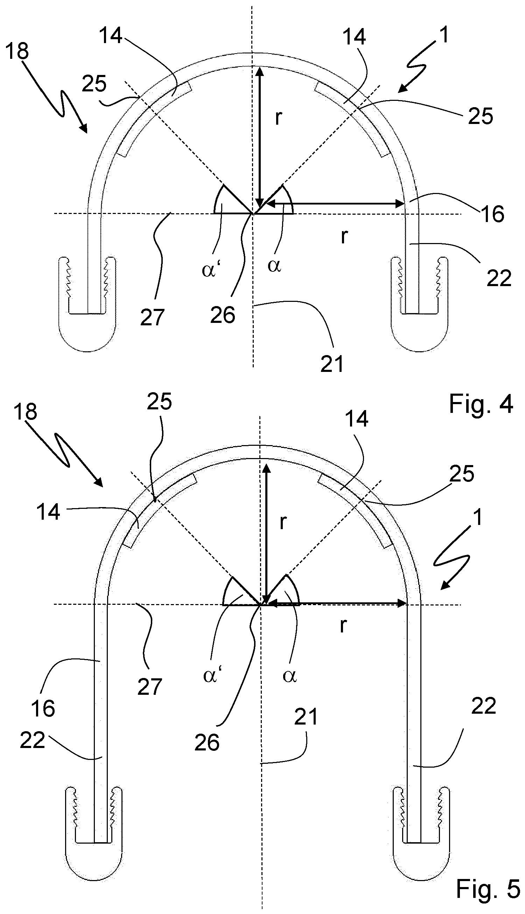

Durch die in den Figuren 2 und 3, aber auch der nachfolgend beschriebene Figuren 4 und 5 gezeigte Anordnungen der Verstärkungsabschnitte 14 wird eine erhebliche Reduzierung des Schalleintrags aus der Umgebung in den von dem Balg 1' definierten Innenraum 11 bewirkt.

Das bahnförmige, biegbare Material 16 der Falten 15 oder Wellen 18 gemäß der gezeigten Ausführungsformen weisen alle eine Dicke von 4 mm auf. Die Materialstreifen 14, welche die Verstärkungsabschnitte 23 definieren, sind 1,1 mm dick, so dass die Dicke der Verstärkungsabschnitte insgesamt 5,1 mm beträgt. Damit ist die Dicke jedes des Verstärkungsabschnitts 23 1,275-mal so groß wie die Dicke der Normalabschnitte 24.

In jeder der gezeigten Ausführungsformen sind die zwei Verstärkungsabschnitte 23 spiegelsymmetrisch zu einer Spiegelsymmetrieebene 21 der Falte 15 oder Welle 18 entlang der Schmalseite der Falte 15 oder Welle 18 verteilt.

In allen gezeigten Ausführungsformen weist jede Falte 15 bzw. jede Welle 18 genau zwei Verstärkungsabschnitte 23 auf.

Die Figuren 4 und 5 zeigen zwei weitere Ausgestaltungen erfindungsgemäßer Wellenbälge 1, wobei von diesen Wellenbälgen jeweils nur eine einzige Welle 18 gezeigt ist.

Während Figur 4 eine Welle 18 mit einer relativ geringen Ausdehnung zeigt, ist die Ausdehnung der Welle 18 aus Figur 5 deutlich größer. Dies führt dazu, dass in der Querschnittsansicht aus Figur 4 die Welle 18 im Wesentlichen vollständig gekrümmt verläuft, während die Welle 18 aus Figur 5 zwei vergleichsweise lange gerade Abschnitte oder Schenkel 22 aufweist.

Es hat sich unabhängig von der Ausdehnung des bahnförmigen Materials 16 in der Richtung parallel zur Schmalseite gezeigt, dass der Bereich des bahnförmigen Materials 16 der Welle 18 mit der geringsten mechanischen Stabilität und damit der höchsten Wahrscheinlichkeit für eine akustische Anregung in einem Bereich von ±45° des von dem bahnförmigen Material 16 gebildeten Bogens liegt.

Daher sind beiden Ausführungsformen der Figuren 4 und 5 die beiden Materialstreifen 14, welche die Verstärkungsabschnitte 23 definieren, derart angeordnet, dass sie zwei gedachte, sich parallel zu den Längsseiten 12 der Welle 18 verlaufende Linien 25 überdecken. Dabei ist in der dargestellten Schnittebene eine erste der beiden Linien 25 unter einem Winkel α von + 45° bezogen auf eine Spiegelsymmetrieebene 21 und eine zweite der beiden Linien 25 unter einem Winkel α' von - 45° bezogen auf die Spiegelsymmetrieebene 21 angeordnet, wobei der Scheitelpunkt 26 der Winkel α, α' gegeben ist durch den Schnittpunkt zwischen der Spiegelsymmetrieebene 21 und einer zu der Spiegelsymmetrieebene 21 senkrechten Geraden 27, so dass ein Umkreis mit dem Radius r um den Scheitelpunkt 26 die Gerade 27 und die Symmetrieebene 21 jeweils innerhalb des biegbaren bahnförmigen Materials 16 der Welle 18 schneidet. Dabei ist die Welle 18 in beiden Figuren 4 und 5 in ihrem nicht-gestreckten und nicht-komprimierten Zustand gezeigt.

Für Zwecke der ursprünglichen Offenbarung wird darauf hingewiesen, dass sämtliche Merkmale, wie sie sich aus der vorliegenden Beschreibung, den Zeichnungen und den Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen wird hier nur der Kürze und der Lesbarkeit der Beschreibung wegen verzichtet.

Während die Erfindung im Detail in den Zeichnungen und der vorangehenden Beschreibung dargestellt und beschrieben wurde, erfolgt diese Darstellung und Beschreibung lediglich beispielhaft und ist nicht als Beschränkung des Schutzbereichs gedacht, so wie er durch die Ansprüche definiert wird. Die Erfindung ist nicht auf die offenbarten Ausführungsformen beschränkt.

### Bezugszeichenliste

- 1: Wellenbalg
- 1': Faltenbalg
- 2, 5: Stirnseiten des Balgs
- 3: Wagenkasten
- 4: Brücke
- 6: Anschraubrahmen
- 7: Dach
- 8, 9: Seitenteil
- 10: Boden
- 11: Innenraum
- 12: Längsseite
- 13: Schmalseite
- 14: Materialstreifen
- 15: Falte
- 16: Materialbahn
- 17: Naht
- 18: Welle
- 19: Ende
- 20: Klemmprofil
- 21: Symmetrieebene
- 22: Schenkel
- 23: Verstärkungsabschnitt
- 24: Normalabschnitt
- 25: gedachte Linie in der Längsrichtung
- 26: Scheitelpunkt
- 27: Gerade

## Patentansprüche

1. Balg (1, 1') als Übergangsschutz für einen Übergang (4) zwischen zwei beweglich miteinander verbundenen Wagenkästen (3) eines mehrteiligen Fahrzeugs oder zwischen zwei beweglich miteinander verbundenen Brückenabschnitten einer Passagierbrücke,
wobei der Balg (1, 1')
ein Dach (7) und
zwei einander gegenüberliegend angeordnete Seitenwände (8, 9) aufweist,
wobei zumindest die zwei Seitenwände (8, 9) jeweils eine Mehrzahl von Falten (15) oder Wellen (18) mit einem biegbaren bahnförmigen Material (16) aufweisen,
wobei jede der Falten (15) oder Wellen (18) eine Schmalseite (13) und eine Längsseite (12) aufweist,
wobei jeweils zwei aneinanderstoßende Falten (15) oder Wellen (18) entlang einer ihrer Längsseiten (12) miteinander verbunden sind,
wobei das biegbare bahnförmige Material (16) aus einem elastomerbeschichteten Trägermaterial besteht,
wobei eine Falte (15) aus zwei miteinander verbundenen flexiblen Materialbahnen, welche zwei im Wesentlichen gerade Flächenabschnitte bilden, hergestellt ist, wobei die beiden Materialbahnen im Scheitelpunkt der Falte (15) miteinander verbunden sind, und
wobei eine Welle (18) aus einer einstückigen im Wesentlichen rechteckigen flexiblen Materialbahn mit einer Längsseite und einer Schmalseite hergestellt ist,
wobei zumindest eine der Falten (15) oder Wellen (18) zumindest einen Verstärkungsabschnitt (23) und zumindest zwei Normalabschnitte (24) aufweist,
wobei der Verstärkungsabschnitt (23) eine Dicke aufweist, die größer ist als eine Dicke der zwei Normalabschnitte (24),
wobei der Verstärkungsabschnitt (23) eine Schmalseite (13) und eine Längsseite (12) aufweist,
wobei sich die Längsseite (12) des Verstärkungsabschnitts (23) im Wesentlichen in Richtung der Längsseite (12) der Falte (15) oder Welle (18) erstreckt und
wobei eine Ausdehnung der Schmalseite (13) des Verstärkungsabschnitts (23) höchstens 75 % einer Ausdehnung der Schmalseite (23) der Falte (15) oder Welle (18) beträgt,
**dadurch gekennzeichnet, dass**
zumindest 50% der Falten (15) oder Wellen (18) mindestens zwei entlang der Schmalseite (13) der Falte (15) oder Welle (18) voneinander beabstandete Verstärkungsabschnitte (23) aufweisen.

2. Balg (1, 1') nach dem vorhergehenden Anspruch, wobei der Verstärkungsabschnitt (23) streifenförmig ist, wobei die Längsseite (12) des streifenförmigen Verstärkungsabschnitts (23) mindestens halb so lang ist, vorzugsweise gleich lang ist, wie die Längsseite (12) eines gerade verlaufenden Abschnitts der Falte (15) oder Welle (18).

3. Balg (1, 1') nach einem der vorhergehenden Ansprüche, wobei die Dicke des Verstärkungsabschnitts (23) mindestens 1,25-mal, vorzugsweise mindestens 1,5-mal und besonders bevorzugt mindestens doppelt so groß ist wie die Dicke des Normalabschnitts (24).

4. Balg (1, 1') nach dem vorhergehenden Anspruch, wobei die Ausdehnung der Schmalseite (13) des Verstärkungsabschnitts (14) höchstens 60 %, vorzugsweise höchstens 50 % und besonders bevorzugt höchstens 25 % der Ausdehnung der Schmalseite (13) der Falte (15) oder Welle (18) beträgt.

5. Balg (1, 1') nach einem der vorhergehenden Ansprüche, wobei die Ausdehnung der Schmalseite (13) des Verstärkungsabschnitts (14) mindestens 5 %, vorzugsweise mindestens 10 % der Ausdehnung der Schmalseite (13) der Falte (15) oder Welle (18) beträgt.

6. Balg (1, 1') nach einem der vorhergehenden Ansprüche, wobei der Balg ein Wellenbalg (1) ist, wobei jede Welle (18) in einer Querschnittsebene parallel zur Schmalseite (13) bogenförmig verläuft oder der Balg ein Faltenbalg (1') ist, wobei die Falten (15) in einer Querschnittsebene parallel zur Schmalseite (13) zick-zack-förmig angeordnet sind.

7. Balg (1, 1') nach einem der vorhergehenden Ansprüche, wobei die mindestens eine Falte (15) oder Welle (18) genau zwei entlang der Schmalseite (13) der Falte (15) oder Welle (18) voneinander beabstandete Verstärkungsabschnitte (23) aufweist.

8. Balg nach dem vorhergehenden Anspruch, wobei die zwei Verstärkungsabschnitte (23) spiegelsymmetrisch entlang der Schmalseite (13) der Falte (15) oder Welle (18) verteilt sind.

9. Balg (1, 1') nach Anspruch 7 oder 8, wobei der Balg ein Wellenbalg (1) mit einer Mehrzahl von Wellen (18) ist,
wobei die zwei Verstärkungsabschnitte (23) zwei gedachte, parallel zu den Längsseiten (12) der Welle (18) verlaufende Linien (25) überdecken und wobei in einer Schnittebene parallel zu der Schmalseite (13) der Welle (18) eine erste der beiden Linien (25) unter einem Winkel (α) von + 45° bezogen auf eine Spiegelsymmetrieebene (21) der Welle (18) und eine zweite der beiden Linien (25) unter einem Winkel (α') von - 45° bezogen auf die Spiegelsymmetrieebene (21) angeordnet sind,
wobei der Scheitelpunkt (26) der Winkel (α,α') gegeben ist durch einen Schnittpunkt zwischen der Spiegelsymmetrieebene (21) und einer zu der Spiegelsymmetrieebene (21) senkrechten Geraden (27), so dass ein Umkreis um den Scheitelpunkt (26) die Gerade (27) und die Symmetrieebene (21) innerhalb des biegbaren bahnförmigen Materials (16) der Welle (18) schneidet, und
wobei der Umkreis in einem nicht-gestreckten und nicht-komprimierten Zustand der Welle (18) bestimmt ist.

10. Balg (1, 1') nach einem der vorhergehenden Ansprüche, wobei der Verstärkungsabschnitt (23) mit einem auf das biegbare bahnförmige Material der Falte (15) oder Welle (18) aufgebrachten, vorzugsweise aufgeklebten, aufgenähten oder aufgeschweißten, Materialstreifen (14) gebildet ist oder der Verstärkungsabschnitt (23) durch eine Verdickung des biegbaren bahnförmigen Materials (16) der Falte (15) oder Welle (18) gebildet ist.

11. Balg (1, 1') nach dem vorhergehenden Anspruch, wobei der Materialstreifen (14) einer Krümmung des biegbaren bahnförmigen Materials (16) der Falte (15) oder Welle (18) folgt.

12. Balg (1, 1') nach Anspruch 10 oder 11, wobei der Materialstreifen (14) mit zwei Nähten mit dem biegbaren bahnförmigen Material (16) der Falte (15) oder Welle (18) vernäht ist, wobei die Nähte in einer Richtung parallel zu der Schmalseite (13) des Materialstreifens (14) einen Abstand von mindestens 5 mm, vorzugsweise von mindestens 7 mm und besonders bevorzugt von mindestens 10 mm zueinander aufweisen.

13. Balg (1, 1') nach einem der vorhergehenden Ansprüche, wobei der Verstärkungsabschnitt (14) auf einer Innenseite (11) des Balgs (1, 1') angeordnet ist.

14. Balg (1, 1') nach einem der vorhergehenden Ansprüche, wobei jede der Falten (15) oder Wellen (18), zumindest einen Verstärkungsabschnitt (23) aufweist.

15. Übergangsystem mit einem Balg (1, 1') nach einem der vorhergehenden Ansprüche und einer Brücke (4).

## Claims

1. Bellows (1, 1') as gangway protection for a gangway (4) between two movably interconnected wagon bodies (3) of a multi-part vehicle or between two movably interconnected bridge portions of a passenger bridge,
the bellows (1, 1') having
a roof (7) and
two side walls (8, 9) arranged opposite one another,
at least the two side walls (8, 9) each having a plurality of folds (15) or corrugations (18) consisting of a flexible web-like material (16),
each of the folds (15) or corrugations (18) having a narrow side (13) and a long side (12),
two adjoining folds (15) or corrugations (18) in each case being interconnected along one of their long sides (12),
the flexible web-like material (16) consisting of an elastomer-coated carrier material,
one fold (15) being produced from two interconnected flexible material webs which form two substantially straight surface portions, the two material webs being interconnected at the vertex of the fold (15), and
one corrugation (18) being produced from a one-piece, substantially rectangular flexible material web having a long side and a narrow side,
at least one of the folds (15) or corrugations (18) having at least one reinforcement portion (23) and at least two normal portions (24),
the reinforcement portion (23) having a thickness greater than a thickness of the two normal portions (24),
the reinforcement portion (23) having a narrow side (13) and a long side (12),
the long side (12) of the reinforcement portion (23) extending substantially in the direction of the long side (12) of the fold (15) or corrugation (18) and
an extent of the narrow side (13) of the reinforcement portion (23) being at most 75% of an extent of the narrow side (23) of the fold (15) or corrugation (18),
**characterized in that**
at least 50% of the folds (15) or corrugations (18) have at least two reinforcement portions (23) which are spaced apart from one another along the narrow side (13) of the fold (15) or corrugation (18).

2. Bellows (1, 1') according to the preceding claim, wherein the reinforcement portion (23) is strip-shaped, wherein the long side (12) of the strip-shaped reinforcement portion (23) is at least half as long, preferably the same length, as the long side (12) of a straight portion of the fold (15) or corrugation (18).

3. Bellows (1, 1') according to either of the preceding claims, wherein the thickness of the reinforcement portion (23) is at least 1.25 times, preferably at least 1.5 times, and particularly preferably at least twice, as great as the thickness of the normal portion (24).

4. Bellows (1, 1') according to the preceding claim, wherein the extent of the narrow side (13) of the reinforcement portion (14) is at most 60%, preferably at most 50%, and particularly preferably at most 25%, of the extent of the narrow side (13) of the fold (15) or corrugation (18).

5. Bellows (1, 1') according to any of the preceding claims, wherein the extent of the narrow side (13) of the reinforcement portion (14) is at least 5%, preferably at least 10%, of the extent of the narrow side (13) of the fold (15) or corrugation (18).

6. Bellows (1, 1') according to any of the preceding claims, wherein the bellows is a corrugated bellows (1), wherein each corrugation (18) extends, in a cross-sectional plane, in an arc-shaped manner in parallel with the narrow side (13), or the bellows is a folding bellows (1'), wherein the folds (15) are arranged, in a cross-sectional plane, in a zigzag pattern in parallel with the narrow side (13).

7. Bellows (1, 1') according to any of the preceding claims, wherein the at least one fold (15) or corrugation (18) has exactly two reinforcement portions (23) which are spaced apart from one another along the narrow side (13) of the fold (15) or corrugation (18).

8. Bellows according to the preceding claim, wherein the two reinforcement portions (23) are distributed mirror-symmetrically along the narrow side (13) of the fold (15) or corrugation (18).

9. Bellows (1, 1') according to claim 7 or 8, wherein the bellows is a corrugated bellows (1) having a plurality of corrugations (18),
wherein the two reinforcement portions (23) cover two imaginary lines (25) extending in parallel with the long sides (12) of the corrugation (18) and wherein, in a section plane in parallel with the narrow side (13) of the corrugation (18), a first of the two lines (25) is arranged at an angle (α) of + 45° with respect to a mirror symmetry plane (21) of the corrugation (18) and a second of the two lines (25) is arranged at an angle (α ') of - 45° with respect to the mirror symmetry plane (21),
wherein the vertex (26) of the angle (α,α') is defined by way of an intersection point between the mirror symmetry plane (21) and a line (27) which is perpendicular to the mirror symmetry plane (21), such that a circumcircle around the vertex (26) intersects the line (27) and the symmetry plane (21) within the flexible web-like material (16) of the corrugation (18), and
wherein the circumcircle is determined in an unstretched and uncompressed state of the corrugation (18).

10. Bellows (1, 1') according to any of the preceding claims, wherein the reinforcement portion (23) is formed using a strip of material (14) applied, preferably glued, sewn or welded, to the flexible web-like material of the fold (15) or corrugation (18) or the reinforcement portion (23) is formed by a thickened portion of the flexible web-like material (16) of the fold (15) or corrugation (18).

11. Bellows (1, 1') according to the preceding claim, wherein the strip of material (14) follows a curvature of the flexible web-like material (16) of the fold (15) or corrugation (18).

12. Bellows (1, 1') according to claim 10 or 11, wherein the strip of material (14) is sewn to the flexible web-like material (16) of the fold (15) or corrugation (18) by two seams, wherein the seams have a distance of at least 5 mm, preferably at least 7 mm, and particularly preferably at least 10 mm, from one another in a direction parallel to the narrow side (13) of the strip of material (14).

13. Bellows (1, 1') according to any of the preceding claims, wherein the reinforcement portion (14) is arranged on an inner side (11) of the bellows (1, 1').

14. Bellows (1, 1') according to any of the preceding claims, wherein each of the folds (15) or corrugations (18) has at least one reinforcement portion (23).

15. Gangway system comprising a bellows (1, 1') according to any of the preceding claims and a bridge (4).

## Revendications

1. Soufflet (1, 1') en tant que moyen de protection de transition pour une transition (4) entre deux caisses de voiture (3) reliées de manière mobile l'une à l'autre d'un véhicule à plusieurs parties ou entre deux sections de pont reliées de manière mobile l'une à l'autre d'un pont pour passagers,
dans lequel le soufflet (1, 1') présente
un toit (7) et
deux parois latérales (8, 9) disposées de manière à être opposées l'une à l'autre,
dans lequel au moins les deux parois latérales (8, 9) présentent respectivement une pluralité de plis (15) ou d'ondulations (18) comportant un matériau flexible en forme de bande (16),
dans lequel chacun des plis (15) ou des ondulations (18) présente un côté étroit (13) et un côté long (12),
dans lequel respectivement deux plis (15) ou ondulations (18) adjacents sont reliés l'un à l'autre le long de l'un de leurs côtés longs (12),
dans lequel le matériau flexible en forme de bande (16) est constitué d'un matériau de support recouvert d'élastomère,
dans lequel un pli (15) est constitué de deux bandes de matériau flexibles reliées l'une à l'autre qui forment deux sections de surface sensiblement droites, dans lequel les deux bandes de matériau sont reliées l'une à l'autre au somment du pli (15), et
dans lequel une ondulation (18) est fabriquée d'une seule pièce à partir d'une bande de matériau flexible sensiblement rectangulaire et comportant un côté long et un côté étroit,
dans lequel au moins l'un des plis (15) ou des ondulations (18) présente au moins une section de renforcement (23) et au moins deux sections normales (24),
dans lequel la section de renforcement (23) présente une épaisseur supérieure à l'épaisseur des deux sections normales (24),
dans lequel la section de renforcement (23) présente un côté étroit (13) et un côté long (12),
dans lequel le côté long (12) de la section de renforcement (23) s'étend sensiblement dans la direction du côté long (12) du pli (15) ou de l'ondulation (18) et
dans lequel une étendue du côté étroit (13) de la section de renforcement (23) est au plus égale à 75 % d'une étendue du côté étroit (23) du pli (15) ou de l'ondulation (18),
**caractérisé en ce que**
au moins 50 % des plis (15) ou des ondulations (18) présentent au moins deux sections de renforcement (23) espacées l'une de l'autre le long du côté étroit (13) du pli (15) ou de l'ondulation (18).

2. Soufflet (1,1') selon la revendication précédente, dans lequel la section de renforcement (23) est en forme de lanière, dans lequel le côté long (12) de la section de renforcement (23) en forme de lanière est au moins deux fois plus long, de préférence de même longueur, que le côté long (12) d'une section droite du pli (15) ou de l'ondulation (18).

3. Soufflet (1, 1') selon l'une des revendications précédentes, dans lequel l'épaisseur de la section de renforcement (23) est d'au moins 1,25 fois, de préférence d'au moins 1,5 fois et particulièrement de préférence d'au moins deux fois l'épaisseur de la section normale (24).

4. Soufflet (1, 1') selon la revendication précédente, dans lequel l'étendue du côté étroit (13) de la section de renforcement (14) est d'au plus 60 %, de préférence d'au plus 50 % et de manière particulièrement préférée d'au plus 25 % de l'étendue du côté étroit (13) du pli (15) ou de l'ondulation (18).

5. Soufflet (1, 1') selon l'une des revendications précédentes, dans lequel l'étendue du côté étroit (13) de la section de renforcement (14) est d'au moins 5 %, de préférence d'au moins 10 %, de l'étendue du côté étroit (13) du pli (15) ou de l'ondulation (18).

6. Soufflet (1, 1') selon l'une des revendications précédentes, dans lequel le soufflet est un soufflet ondulé (1) dans lequel chaque ondulation (18) s'étend en forme d'arc dans un plan de section transversale parallèle au côté étroit (13) ou le soufflet est un soufflet plié (1'), dans lequel les plis (15) sont disposés en zigzag dans un plan de section transversale parallèle au côté étroit (13).

7. Soufflet (1, 1') selon l'une des revendications précédentes, dans lequel au moins un pli (15) ou une ondulation (18) présente exactement deux sections de renforcement (23) espacées l'une de l'autre le long du côté étroit (13) du pli (15) ou de l'ondulation (18).

8. Soufflet selon la revendication précédente, dans lequel les deux sections de renforcement (23) sont réparties symétriquement en miroir le long du côté étroit (13) du pli (15) ou de l'ondulation (18).

9. Soufflet (1, 1') selon la revendication 7 ou 8, dans lequel le soufflet est un soufflet ondulé (1) comportant une pluralité d'ondulations (18),
dans lequel les deux sections de renforcement (23) recouvrent deux lignes (25) imaginaires parallèles aux côtés longs (12) de l'ondulation (18) et dans lequel, dans un plan de coupe parallèle au côté étroit (13) de l'ondulation (18), une première ligne parmi les deux lignes (25) est disposée à un angle (α) de + 45° par rapport à un plan de symétrie en miroir (21) de l'ondulation (18) et une seconde ligne parmi les deux lignes (25) est disposée à un angle (α') de - 45° par rapport au plan de symétrie en miroir (21),
dans lequel le sommet (26) de l'angle (α, α') est donné par un point d'intersection entre le plan de symétrie en miroir (21) et une droite (27) perpendiculaire au plan de symétrie en miroir (21), de sorte qu'un cercle circonscrit autour du sommet (26) intersecte la droite (27) et le plan de symétrie (21) à l'intérieur du matériau flexible en forme de bande (16) de l'ondulation (18), et
dans lequel le cercle circonscrit est déterminé dans un état non étiré et non comprimé de l'ondulation (18).

10. Soufflet (1, 1') selon l'une des revendications précédentes, dans lequel la section de renforcement (23) est formée avec une lanière de matériau (14) appliquée, de préférence collée, cousue ou soudée, sur le matériau flexible en forme de bande du pli (15) ou de l'ondulation (18), ou la section de renforcement (23) est formée par un épaississement du matériau flexible en forme de bande (16) du pli (15) ou de l'ondulation (18).

11. Soufflet (1, 1') selon la revendication précédente, dans lequel la lanière de matériau (14) suit une courbure du matériau flexible en forme de bande (16) du pli (15) ou de l'ondulation (18).

12. Soufflet (1, 1') selon la revendication 10 ou 11, dans lequel la lanière de matériau (14) est cousue au matériau flexible en forme de bande (16) du pli (15) ou de l'ondulation (18) par deux coutures, dans lequel les coutures présentent une distance d'au moins 5 mm, de préférence d'au moins 7 mm et de manière particulièrement préférée d'au moins 10 mm, l'une de l'autre dans une direction parallèle au côté étroit (13) de la lanière de matériau (14).

13. Soufflet (1, 1') selon l'une des revendications précédentes, dans lequel la section de renforcement (14) est disposée sur un côté intérieur (11) du soufflet (1, 1').

14. Soufflet (1, 1') selon l'une des revendications précédentes, dans lequel chacun des plis (15) ou des ondulations (18) présente au moins une section de renforcement (23).

15. Système de transition comportant un soufflet (1, 1') selon l'une des revendications précédentes et un pont (4).
